# EUROPÄISCHE PATENTSCHRIFT

(11) **EP 1 638 243 B1**
(45) Veröffentlichungstag und Bekanntmachung des Hinweises auf die Patenterteilung: **08.10.2008**
(21) Anmeldenummer: 05106580.3
(22) Anmeldetag: 18.07.2005
(51) Int. Cl.: H04L 7/00, H04L 1/22

(54) **Datenverarbeitungsvorrichtung mit Taktrückgewinnung aus unterschiedlichen Quellen**
Processing device with clock recovery from different sources
Dispositif de traitement avec récupération d'horloge de sources différentes

(30) Priorität: 16.09.2004 DE 102004044815
(43) Veröffentlichungstag der Anmeldung: 22.03.2006
(73) Patentinhaber: ROBERT BOSCH GMBH, 70442 Stuttgart (DE)
(72) Erfinder: Schnitzer, Reiner, 72764 Reutlingen (DE); Boehl, Eberhard, 72768 Reutlingen (DE)

(56) Entgegenhaltungen:
- EP-A- 1 365 543
- US-A- 4 349 914
- US-A- 4 827 490
- US-A- 5 577 196
- US-A- 5 692 022
- US-B1- 6 178 212

## Beschreibung

Die vorliegende Erfindung betrifft eine Datenverarbeitungsvorrichtung und ein Datenverarbeitungsverfahren mit Taktrückgewinnung aus verschiedenen Empfangsdatenströmen.

Aus der US 4,349,914 ist ein bitsynchrones Schaltsystem zum Space-Diversity-Betrieb bekannt. Die bekannte Vorrichtung enthält eine Vorrichtung zum Synchronisieren zweier Datenströme, die dieselben Informationen übertragen, sowie eine Einrichtung zum kontinuierlichen Auswählen des besseren Datenstroms der zwei Datenströme zur Wiedergabe.

Einer der empfangenden Datenströme wird mittels einer Verzögerungseinrichtung um einen vorbestimmten Verzögerungswert so verzögert, daß die zwei Datenströme zu unterschiedlichen Zeitpunkten eintreffen.

Die US-A-5,577,196 und die EP 1365 543 A2 offenbaren bidirektionale Netzwerke, in denen redundante Informationen übertragen werden, wobei in einem Empfänger oder in einer Zwischenstation vor der Umschaltung auf einen redundanten Signalpfad die Laufzeiten der Signalströme ausgeglichen werden.

Spezifisch betrifft die vorliegende Erfindung eine Datenverarbeitungsvorrichtung mit einer ersten Empfangsdaten-Eingabeeinheit zur Eingabe eines ersten Empfangsdatenstroms in die Datenverarbeitungsvorrichtung, mindestens einer zweiten Empfangsdaten-Eingabeeinheit zur Eingabe mindestens eines zweiten Empfangsdatenstroms in die Datenverarbeitungsvorrichtung und einer Taktrückgewinnungseinrichtung zur Rückgewinnung eines Taktsignals aus dem ersten Empfangsdatenstrom und/oder dem mindestens einen zweiten Empfangsdatenstrom.

Taktrückgewinnungseinrichtungen werden üblicherweise an eine Datenquelle angeschlossen und gewinnen einen der Datenquelle zueigenen Takt zurück. Üblicherweise werde derartige Taktrückgewinnungseinrichtungen mit Phasenregelschleifen (PLL = Phase Locked Loop) betrieben.

Hierbei wird derjenige Takt zurück gewonnen, mit welchem die betreffenden Datenströme gesendet wurden. Bei sicherheitskritischen Anwendungen sind duplizierte Netze vorhanden. Aus Sicherheitsgründen werden für derartige duplizierte Netze unterschiedliche Taktrückgewinnungseinrichtungen eingesetzt. Eine Datenübertragung erfolgt dann mittels zweier getrennter Systeme, die ihre Daten untereinander austauschen.

Datenverarbeitungssysteme, die mehrere Datenströme verarbeiten, können vom gleichen Taktsignal getrieben werden. Da dann die mindestens zwei Datenströme von deinem gemeinsamen Taktsignal verarbeitet werden, und da dieses Taktsignal mittels einer Taktrückgewinnungseinrichtung mit Phasenregelschleife aus den Datenströmen wieder gewonnen wird, ist es erforderlich, dass das Taktsignal auch dann noch zur Verfügung steht bzw. wieder gewonnen werden kann, wenn einer der mindestens zwei Datenströme durch einen Fehler in dem Datensystem ausfällt.

Zur Lösung dieses Problems setzen herkömmliche Datenverarbeitungssysteme Umschalteinrichtungen ein, welche dafür sorgen, dass bei einem Ausfall eines Datenstroms eine Taktrückgewinnung mittels der Taktrückgewinnungseinrichtung auf den mindestens einen zweiten Datenstrom verlagert wird. In nachteiliger Weise besteht jedoch zwischen dem ersten Datenstrom und dem mindestens einen Datenstrom im Allgemeinen eine Phasenverschiebung derart, dass eine Einschwingzeit erforderlich ist, wenn die Taktrückgewinnungseinrichtung ein Taktsignal von einem anderen Datenstrom rück gewinnt und synchronisiert. Derartige Einschwingzeiten können in der Größenordnung von 10 bis 20 Millisekunden (ms) liegen, wobei eine derartige Einschwingzeit für sicherheitskritische Anwendungen nicht tolerierbar ist.

Insbesondere für X-by-wire-Systeme lassen sich derartige Taktrückgewinnungseinrichtungen aus Sicherheitsgründen nicht einsetzen.

Es ist daher eine Aufgabe der vorliegenden Erfindung, eine Datenverarbeitungsvorrichtung zu schaffen, welche auf unterschiedliche Datenströme bei geringen Einschwingzeiten synchronisierbar ist.

Diese Aufgabe wird erfindungsgemäß durch eine Datenverarbeitungsvorrichtung mit den Merkmalen des Patentanspruchs 1 gelöst.

Ferner wird die Aufgabe durch in im Patentanspruch 10 angegebenes Datenverarbeitungsverfahren gelöst

Weitere Ausgestaltungen der Erfindung ergeben sich aus den Unteransprüchen.

Ein wesentlicher Gedanke der Erfindung besteht darin, eine zwischen unterschiedlichen Datenströmen, mit welchen die Datenverarbeitungsvorrichtung beaufschlagt wird, vorhandene Phasenverschiebung vor einem eventuell notwendigen Umschalten der in der Datenverarbeitungsvorrichtung bereitgestellten Taktrückgewinnungseinrichtung auszugleichen.

Ein Kern der Erfindung besteht darin, ein Verzögerungssignal, das eine zeitliche Verzögerung zwischen einem ersten Empfangsdatenstrom und mindestens einem zweiten Empfangsdatenstrom repräsentiert, vorab, d.h. vor einem Ausfall eines der beiden Datenströme zu bestimmen und in einer Speichereinheit abzulegen.

Somit besteht der Vorteil, dass dann, wenn einer der beiden Empfangsdatenströme ausfällt, eine Umschaltung einer Taktrückgewinnung zwischen den Datenströmen bei vernachlässigbarer Einschwingzeit erfolgen kann.

Gemäß einer bevorzugten Weiterbildung der vorliegenden Erfindung umfasst die Taktrückgewinnungseinrichtung eine Phasenregelschleife (PLL, Phase Locked Loop), welche ein rück gewonnenes Taktsignal auf den Takt eines der der Datenverarbeitungsvorrichtung zugeführten Datenströme synchronisiert.

Ein weiterer Aspekt der vorliegenden Erfindung ist auf eine Bestimmungseinheit zur Bestimmung einer zeitlichen Verschiebung zwischen dem ersten Empfangsdatenstrom und dem mindestens einen zweiten Empfangsdatenstrom gerichtet. Die Bestimmung einer zeitlichen Verschiebung liefert in vorteilhafter Weise ein Verzögerungssignal, mit welchem einer der zugeführten Empfangsdatenströme derart verzögert werden kann, dass die der Datenverarbeitungseinrichtung zugeführten Datenströme synchronisiert sind. Somit kann die Taktrückgewinnungseinrichtung in vorteilhafter Weise schnell zwischen einer Synchronisation durch unterschiedliche Empfangsdatenströme zurückgreifen.

In zweckmäßiger Weise ist die Speichereinheit zur Speicherung mindestens eines Verzögerungswert bereitgestellt, wobei der mindestens eine zweite Empfangsdatenstrom entsprechend dem Verzögerungswert verzögert wird.

Noch ein weiterer Aspekt der vorliegenden Erfindung ist auf eine Kalibrierschalteinheit gerichtet, mit welcher von einem Normalmodus, in welchem das Taktsignal aus dem ersten Empfangsdatenstrom oder dem mindestens einen Empfangsdatenstrom wieder gewonnen wird, in einen Kalibriermodus, in welchem mittels der Bestimmungseinheit ein Verzögerungswert für den mindestens einen zweiten Empfangsdatenstrom bestimmt wird, umgeschaltet wird.

Es ist vorteilhaft, die Verzögerungseinheit zur Bereitstellung einer variablen Verzögerung des mindestens einen zweiten Empfangsdatenstroms gegenüber dem ersten Empfangsdatenstrom aus in Reihe geschalteten Invertereinheiten auszubilden. Vorzugsweise ist die Anzahl der in Reihe geschalteten Invertereinheiten variierbar, derart, dass eine variable Verzögerung mittels der Verzögerungseinheit eingestellt werden kann. Die Größe der variablen Verzögerung wird in zweckmäßiger Weise in Abhängigkeit von dem in der Speichereinheit gespeicherten Verzögerungswert eingestellt.

Ferner ist es vorteilhaft, dass ein erster Sendedatenstrom an einer ersten Sendedaten-Ausgabeeinheit der Datenverarbeitungsvorrichtung in Abhängigkeit von dem ersten Empfangsdatenstrom bereitgestellt wird. Auf ähnliche Weise wird ein zweiter Sendedatenstrom an einer zweiten Sendedaten-Ausgabeeinheit der Datenverarbeitungsvorrichtung in Abhängigkeit von dem ersten Empfangsdatenstrom bereitgestellt.

Somit kann die erfindungsgemäße Datenverarbeitungsvorrichtung ein Umschalten zwischen einem ersten Empfangsdatenstrom und mindestens einem zweiten Empfangsdatenstrom auf eine schnelle und effiziente Weise bereitstellen, derart, dass bei einer Taktrückgewinnung des Taktsignals mittels einer Taktrückgewinnungseinrichtung keine Einschwingzeiten bzw. Zeitverzögerungen auftreten, welche eine Datenverarbeitung in der Datenverarbeitungsvorrichtung durch ein nicht exakt synchronisiertes Taktsignal verhindern würden.

Ausführungsbeispiele der Erfindung sind in den Zeichnungen dargestellt und in der nachfolgenden Beschreibung näher erläutert.

### ZEICHNUNGEN

In den Zeichnungen zeigen:
- Fig.1: ein Gesamt-Blockbild der erfindungsgemäßen Datenverarbeitungsvorrichtung zur Veranschaulichung der Prinzipien der Erfindung;
- Fig. 2: ein detailliertes Blockschaltbild der Datenverarbeitungsvorrichtung gemäß einem bevorzugten Ausführungsbeispiel der vorliegenden Erfindung, wobei der Betrieb der Datenverarbeitungsvorrichtung in einem Kalibriermodus veranschaulicht ist; und
- Fig. 3: ein detailliertes Blockbild der Datenverarbeitungsvorrichtung gemäß einem bevorzugten Ausführungsbeispiel der vorliegenden Erfindung, wobei ein Betrieb der Datenverarbeitungsvorrichtung in einem Normalmodus, d.h. in einer Arbeitsphase gezeigt ist.

In den Figuren bezeichnen gleiche Bezugszeichen gleiche oder funktionsgleiche Komponenten oder Schritte.

### BESCHREIBUNG DER AUSFÜHRUNGSBEISPIELE

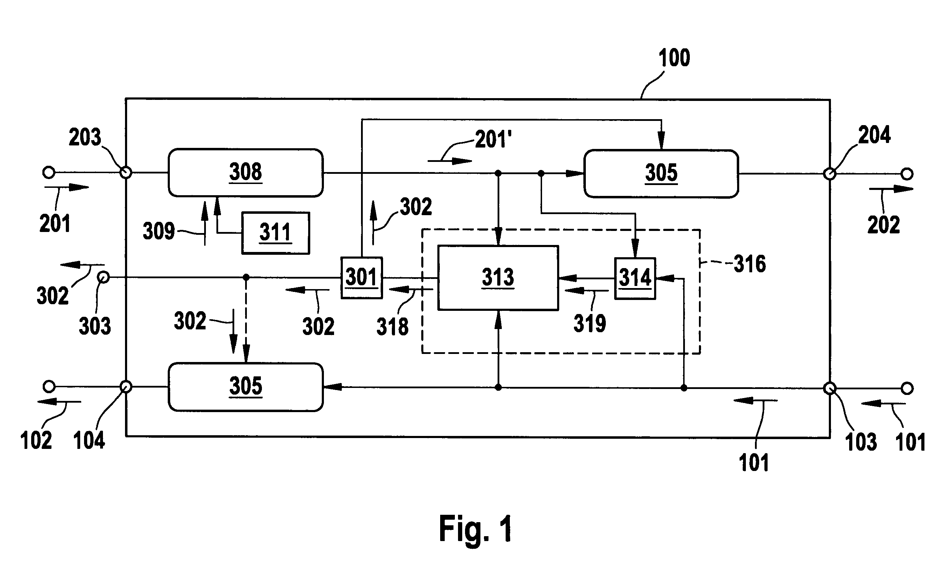

Fig. 1 zeigt ein Gesamt-Blockbild einer Datenverarbeitungsvorrichtung gemäß einem bevorzugten Ausführungsbeispiel der vorliegenden Erfindung. Wie in Fig. 1 gezeigt, wird die Datenverarbeitungsvorrichtung 100 mit einem ersten Empfangsdatenstrom 101 beaufschlagt, welcher einer ersten Empfangsdaten-Eingabeeinheit 103 der Datenverarbeitungsvorrichtung 100 zugeführt wird. Mindestens ein zweiter Empfangsdatenstrom 201 wird einer zweiten Empfangsdaten-Eingabeeinheit 203 der Datenverarbeitungsvorrichtung 100 zugeführt.

Es sei darauf hingewiesen, dass, obwohl dies in der Fig. 1 nicht veranschaulicht ist, mehrere Empfangsdatenströme zugeführt werden können. Im Allgemeinen werden der Datenverarbeitungsvorrichtung 100 mindestens ein erster Empfangsdatenstrom 101 und mindestens ein zweiter Empfangsdatenstrom 201 zugeführt. In dem in Fig. 1 veranschaulichten Beispiel dient der erste Empfangsdatenstrom 101 als ein Referenzdatenstrom für den zweiten Empfangsdatenstrom 201. Um in einem Datenverarbeitungssystem mehrere (mindestens zwei) Datenverarbeitungsvorrichtungen 100 hintereinander schalten zu können, müssen die jeweiligen ersten und zweiten Empfangsdatenströme 101, 201 auch als erste bzw. zweite Sendedatenströme 102 bzw. 202 ausgebbar sein.

Zu diesem Zweck ist in der Datenverarbeitungsvorrichtung eine erste Sendedaten-Ausgabeeinheit 104 zur Ausgabe des ersten Sendedatenstroms 102 bereitgestellt, während eine zweite Sendedaten-Ausgabeeinheit 204 zur Ausgabe des zweiten Sendedatenstroms 202 bereitgestellt ist.

Der erste Empfangsdatenstrom 101 wird einer Synchronisationseinheit 305 zugeführt, welche, in Abhängigkeit von einem zugeführten Taktsignal 302 dafür sorgt, dass der erste Empfangsdatenstrom 101 entsprechend dem zugeführten Taktsignal 302 zu der ersten Sendedaten-Ausgabeeinheit 104 als der erste Sendedatenstrom 102 zugeführt wird.

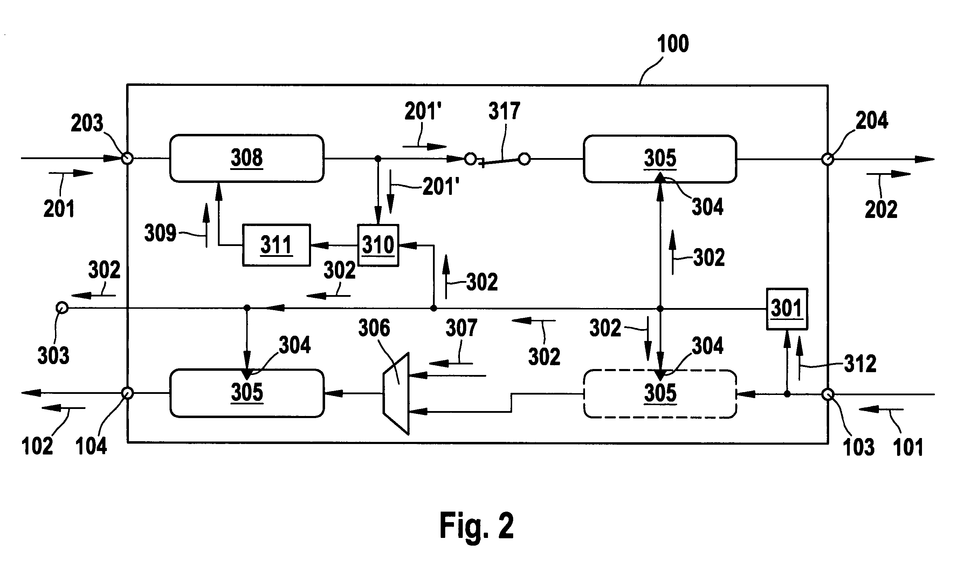

In gleicher Weise wird der zweite Empfangsdatenstrom (mindestens ein zweiter Empfangsdatenstrom 201 ist vorhanden) 201 einer Synchronisationseinheit 305 zugeführt wird, aus welcher über die zweite Sendedaten-Ausgabeeinheit 204 der zweite Sendedatenstrom 202 ausgegeben wird. In den Signalpfad des zweiten Sendedatenstroms 201 ist ferner eine Verzögerungseinheit 308 geschaltet, welche ausgelegt ist, den zweiten Empfangsdatenstrom 201 um einen vorgegebenen Betrag, d.h. um einen der Verzögerungseinheit 308 zugeführten Verzögerungswert 309 zu verzögern. Der Verzögerungswert 309 ist in einer Speichereinheit 311 abgespeichert und wird bei Bedarf aus dieser ausgelesen. Wie ein derartiger Verzögerungswert 309 bestimmt und in der Speichereinheit 311 abgespeichert wird, wird untenstehend unter Bezugnahme auf Fig. 2 erläutert werden.

Aus einer Taktrückgewinnungseinrichtung 301 werden Taktsignale 302 den unterschiedlichen Einheiten zugeführt. Somit wird das Taktsignal 302 den jeweiligen Synchronisationseinheiten 305, die in dem Signalpfad des ersten Empfangsdatenstroms 101 und des zweiten Empfangsdatenstroms 201 angeordnet sind, zugeführt. Ferner kann das Taktsignal 302 über einen Taktsignalausgang 303 zu Einheiten außerhalb der Datenverarbeitungsvorrichtung 100 ausgegeben werden.

Die Taktrückgewinnungseinrichtung 301 wird von einem aus einer Steuereinrichtung 316 ausgegebenen Steuersignal 318 gesteuert. D.h. eine Synchronisation auf einen der beiden Empfangsdatenströme 101 bzw. 201 wird durch das Steuersignal 318 bewirkt.

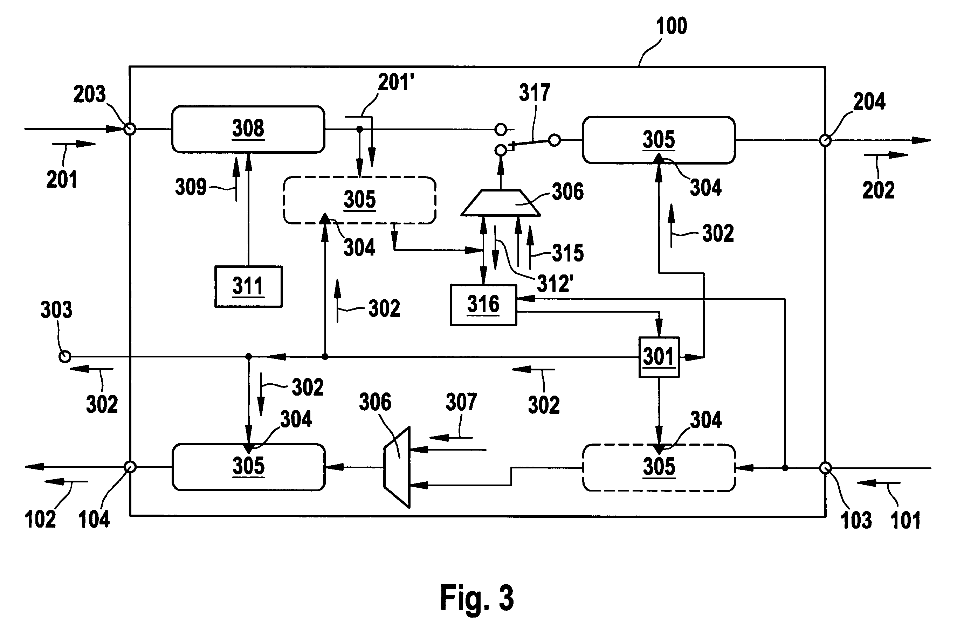

Die Steuereinrichtung 316 weist eine Umschalteinheit 313 und eine Aktivitätserfassungseinheit 314 auf. Sowohl der Aktivitätserfassungseinheit 314 als auch der Umschalteinheit 313 werden die beiden Empfangsdatenströme 101 bzw. 201 zugeführt. In einem Normalmodus, der untenstehend unter Bezugnahme auf Fig. 3 beschrieben ist, ermöglicht es die Umschalteinheit 313 der Steuereinrichtung 316, dass festgelegt wird, auf welchen Empfangsdatenstrom, d.h. den ersten Empfangsdatenstrom 101 oder den zweiten Empfangsdatenstrom 201, das wiederzugewinnende Taktsignal 302 synchronisiert wird. In einem normalen Betriebsmodus ist die Taktrückgewinnungseinrichtung 301 zunächst auf den ersten Empfangsdatenstrom 101 synchronisiert. Die Aktivitätserfassungseinheit 314 erfasst hierbei eine Aktivität in dem ersten Empfangsdatenstrom 101 und in dem verzögerten, zweiten Empfangsdatenstrom 201'.

Fällt einer der beiden Empfangsdatenströme 101, 201 aus, so sendet die Aktivitätserfassungseinheit 314 ein entsprechendes Auswahlsignal 319 zu der Umschalteinheit 313. Die Umschalteinheit 313 kann nun sofort, d.h. ohne Einschwingzeit bei einem Ausfall eines Empfangsdatenstroms auf den jeweils anderen Empfangsdatenstrom umschalten. Die beiden Empfangsdatenströme 101 und 201 sind vermöge der Verzögerungseinheit 308 aufeinander synchronisiert, so dass der Taktrückgewinnungseinrichtung 301 ein entsprechendes Steuersignal 318 zur Synchronisation mit einem Datenstrom ohne eine Zeitverzögerung zugeführt werden kann.

Somit arbeitet eine Phasenregelschleife der Taktrückgewinnungseinrichtung 301 auch bei einem Ausfall eines Empfangsdatenstroms weiter, ohne dass eine entsprechende Einschwingzeit (Einschwingperiode) erforderlich ist.

Fig. 2 zeigt die in Fig. 1 veranschaulichte Datenverarbeitungsvorrichtung geschaltet in einen Kalibriermodus. In dem Kalibriermodus wird, wie obenstehend unter Bezugnahme auf Fig. 1 beschrieben, der Verzögerungswert 309 bestimmt, welcher der Verzögerungseinheit 308 zur Verzögerung des mindestens einen zweiten Empfangsdatenstroms 201 zugeführt werden muss. Wie in Fig. 2 veranschaulicht, wird der erste Empfangsdatenstrom 101 über die erste Empfangsdaten-Eingabeeinheit 103 einer Synchronisationseinheit 305 zugeführt, welche über ihren Taktsignaleingang 304 das Taktsignal 302 erhält. Es sei darauf hingewiesen, dass diese Synchronisationseinheit 305 optional bereitgestellt werden kann.

Anschließend wird der bereits synchronisierte erste Empfangsdatenstrom 101 einer Multiplexiereinheit 306 zugeführt, welche es ermöglicht, dass sowohl der erste Empfangsdatenstrom 101 als auch ein erster interner Datenstrom 307 an eine zweite Synchronisationseinheit 305 weitergeleitet werden können, welche über ihren entsprechenden Taktsignaleingang 304 ebenfalls das Taktsignal 302 erhält. Schließlich wird der erste Empfangsdatenstrom 101 als ein erster Sendedatenstrom 102 aus der zweiten Synchronisationseinheit 305 über die erste Sendedaten-Ausgabeeinheit 104 ausgegeben. Die Taktrückgewinnungseinrichtung 301 erhält ein Synchronisationssignal 312, welches aus dem ersten Empfangsdatenstrom abgeleitet ist.

Im Folgenden wird eine Phasenverschiebung zwischen dem zweiten Empfangsdatenstrom 201 und dem ersten Empfangsdatenstrom 101 ermittelt. Zu diesem Zweck wird einer Bestimmungseinheit 310 das von der Taktrückgewinnungseinrichtung 301 bereitgestellte Taktsignal 302 zugeführt. Ferner wird der Bestimmungseinheit 310 der durch die Verzögerungseinheit 308 (obenstehend unter Bezugnahme auf Fig. 1 beschrieben) verzögerte zweite Empfangsdatenstrom 201' zugeführt.

Die Bestimmungseinheit 310 bestimmt nun eine zeitliche Verzögerung zwischen dem Taktsignal 302 und dem zweiten, verzögerten Empfangsdatenstrom 201' und stellt einen Verzögerungswert 309, welcher der Verzögerungseinheit 308 zugeführt wird, derart ein, dass eine zeitliche Verzögerung zwischen dem Taktsignal 302 und dem verzögerten zweiten Empfangsdatenstrom 201' zu Null wird. In diesem Kalibrierungsmodus wird der Verzögerungswert 309 über einen längeren Zeitraum gemessen und es wird untersucht, ob der Verzögerungswert zur Verzögerung des zweiten Empfangsdatenstroms 201, um den verzögerten zweiten Empfangsdatenstrom 201' zu erhalten, stabil bleibt. Ändert sich der Verzögerungswert 309 über einen längeren Zeitraum nicht mehr, so wird dieser Verzögerungswert 309 in einer Speichereinheit 311 abgespeichert, derart, dass dieser Verzögerungswert 309 zu beliebigen Zeitpunkten zur Verzögerung des zugeführten zweiten Empfangsdatenstroms 201 herangezogen werden kann. Es sei darauf hingewiesen, dass in Abhängigkeit von einem Anwendungsfall unterschiedliche Verzögerungswerte 309 in der Speichereinheit 311 gespeichert werden können. Während der Kalibrierphase ist eine Kalibrierschalteinheit 317 derart geschaltet, dass der zweite Empfangsdatenstrom 201 unverändert über eine Synchronisationseinheit 305, welcher das Taktsignal 302 über deren Taktsignaleingang 304 zugeführt wird, zu der zweiten Sendedaten-Ausgabeeinheit 204 ausgegeben wird.

Durch den Kalibriermodus, der durch das bevorzugte Ausführungsbeispiel der vorliegenden Erfmdung bereitgestellt wird, ist es somit möglich, durch eine Datenverarbeitungsvorrichtung 100 geleitete erste und zweite Empfangsdatenströme 101 bzw. 201 derart aufeinander abzustimmen, dass eine Synchronisation einer Taktrückgewinnungseinrichtung durch jedweden der der Datenverarbeitungsvorrichtung 100 zugeführten Datenströme 101, 201 bereitgestellt werden kann. Insbesondere ist es möglich, mit der obenstehend unter Bezugnahme auf Fig. 1 beschriebenen Umschalteinheit 313 eine Umschaltung der Synchronisation zwischen den beiden Empfangsdatenströmen 101, 201 vorzunehmen, ohne dass eine Einschwingperiode erforderlich ist. Somit ist eine Taktrückgewinnung schnell und effizient aus einem der beiden Empfangsdatenströme 101, 201 ermöglicht.

Fig. 3 zeigt die erfindungsgemäße Datenverarbeitungsvorrichtung 100 in einem Übersichts-Blockbild. Wie in Fig. 3 gezeigt, wird der verzögerte zweite Empfangsdatenstrom 201' nunmehr nicht mehr zu der zweiten Sendedaten-Ausgabeeinheit 204 über die Synchronisationseinheit 305 durchgeleitet.

Es sei darauf hingewiesen, dass in den Figuren gleiche Bezugszeichen gleiche oder funktionsgleiche Komponenten oder Schritte bezeichnen, so dass in Fig. 3 bereits beschriebene Komponenten oder Schritte bei der Erläuterung weggelassen werden, um eine überlappende Beschreibung zu vermeiden.

Die Kalibrierschalteinheit 317 ist in Fig. 3 in einen Normalmodus geschaltet, derart, dass der zweite Empfangsdatenstrom 201 mit einem festen Verzögerungswert 309 vermöge der Verzögerungseinheit 308 verzögert wird. Dieser verzögerte zweite Empfangsdatenstrom 201' wird über eine Synchronisationseinheit 305, welcher über einen Taktsignaleingang 304 das Taktsignal 302 zugeführt wird, synchronisiert wird. Es sei darauf hingewiesen, dass diese erste Synchronisationseinheit 305 in dem Signalpfad des zweiten Empfangsdatenstroms 201, 201' optional ist.

Auf ähnliche Weise wie obenstehend unter Bezugnahme auf Fig. 2 für den ersten Empfangsdatenstrom 101 beschrieben, wird auch der verzögerte zweite Empfangsdatenstrom 201' einer Multiplexiereinheit 306 zugeführt, welche die Möglichkeit bereitstellt, einen zweiten internen Datenstrom 315 oder den verzögerten zweiten Empfangsdatenstrom 201' zu einer zweiten Synchronisationseinheit 305, welcher das Taktsignal 302 über einen zugeordneten Taktsignaleingang 304 zugeführt wird, zu der zweiten Sendedaten-Ausgabeeinheit 204 auszugeben.

Durch die erfindungsgemäße Steuereinrichtung 316, welche die Umschalteinheit 3 13 (siehe Fig. 1) aufweist, ist es nunmehr möglich, der Taktrückgewinnungseinrichtung 301 entweder eine Synchronisationsinformation (Synchronisationssignal 312), das von dem ersten Empfangsdatenstrom 101 abgeleitet ist, zuzuführen, oder der Taktrückgewinnungseinrichtung 301 ein Synchronisationssignal 312', das von dem verzögerten zweiten Empfangsdatenstrom 201' abgeleitet ist, zuzuführen. Fällt nun einer der beiden Empfangsdatenströme 101 bzw. 201 aus, so ermöglicht die Steuereinrichtung 316 eine rasche Umschaltung zwischen der Synchronisationsinformation, die von dem ersten Empfangsdatenstrom 101 zugeführt wird, und der Synchronisationsinformation, die von dem zweiten Empfangsdatenstrom 201 zugeführt wird.

Gemäß dem bevorzugten Ausführungsbeispiel der vorliegenden Erfindung wird in einem Netz mit mehreren Empfangsdatenströmen der gleichen Grundfrequenz zunächst ein Empfangsdatenstrom ausgewählt, mit welchem die Phasenregelschleife einer Taktrückgewinnungseinrichtung 301 einsynchronisiert wird. Dieser Empfangsdatenstrom wird als ein Referenzdatenstrom bezeichnet. Nachdem die Phasenregelschleife der Taktrückgewinnungseinrichtung 301 eingeschwungen ist, d.h. wenn ein Lock-Signal erhalten worden ist und die Daten des Datenstroms als fehlerfrei erkannt werden, werden die Daten des mindestens einen zweiten Empfangsdatenstroms 201 empfangen und ausgewertet. Eine Bestimmung, ob die Daten fehlerfrei erkannt werden, wird beispielsweise an Hand eines Codes, einem Rahmenaufbau und der Anzahl von Bytes pro Rahmen ermittelt.

Aufgrund der vorhandenen Phasenverschiebung zwischen den beiden Empfangsdatenströmen werden die von dem mindestens einen zweiten Empfangsdatenstrom 201 empfangenen Daten unter Umständen nicht fehlerfrei sein. Die Daten des zweiten Empfangsdatenstroms 201 werden nun mittels der Verzögerungseinheit 308 ausgehend von einem festen Anfangswert verzögert, derart, dass die Phasenlagen der beiden Empfangsdatenströme so lange angeglichen werden, bis die Daten des zweiten Empfangsdatenstrom 201 mit dem aus dem Referenzdatenstrom generierten Takt fehlerfrei und zuverlässig empfangen werden können.

In dem Kalibriermodus (obenstehend unter Bezugnahme auf Fig. 2 beschrieben) wird eine derartige netzabhängige Verzögerung ermittelt. Die Daten des zweiten Empfangsdatenstroms werden während des Kalibriermodus mittels der Kalibrierschalteinheit 317 unverändert an die zweite Sendedaten-Ausgabeeinheit 204, d.h. einen nachfolgenden Knoten weitergeleitet. Bevor die ersten oder zweiten Empfangsdatenströme 101, 201 über die entsprechenden Ausgabeeinheiten als Sendedatenströme 102, 202 ausgegeben werden, bewirkt eine Synchronisation in jeweiligen Synchronisationseinheiten 305, die jeweils durch das Taktsignal 302 geschaltet werden, dass auch nach einem Öffnen der Kalibrierschalteinheit 317, d.h. nach einem Umschalten in einen Normalmodus, die Phasenlage unverändert bleibt. Aus diesem Grund ist es möglich, bei hintereinander geschalteten Datenverarbeitungsvorrichtungen sämtliche Knoten gleichzeitig zu kalibrieren. Somit gehen sämtliche Knoten gleichzeitig in eine Arbeitsphase über. Die Information zum Umschalten wird als eine Status- bzw. Steuerinformation über den Referenzdatenstrom übertragen.

Zur Realisierung einer variablen Verzögerung durch die Verzögerungseinheit 308 ist diese beispielsweise aus einer variablen Anzahl von Invertern ausgebildet.

Alternativ ist es möglich, die Phasenverschiebung zwischen den beiden Empfangsdatenströmen direkt zu messen und durch das Verzögerungselement zu eliminieren. Eine direkte Messung ist durch dem Fachmann bekannte, herkömmliche Messschaltungen realisierbar, indem beispielsweise eine Flanke des Referenzdatenstroms die Messeinheit startet und eine Flanke des zweiten Empfangsdatenstroms 201 die Messeinheit ausschaltet. Somit erzeugt die Messeinheit eine Spannung, die proportional zu einer Zeitdifferenz (Phasendifferenz) zwischen den beiden Empfangsdatenströmen 101, 201 ansteigt. Mit einer derartigen Spannung lässt sich das Verzögerungselement 308 ansteuern bzw. schalten, wobei der Verzögerungswert spannungsabhängig vorgegeben ist.

Sobald in dem Kalibriermodus über einen definierbaren längeren Zeitraum auch von dem zweiten Empfangsdatenstrom 201 stabil Daten empfangen werden, wird der Kalibrierwert, d.h. der Verzögerungswert 309 für die Verzögerungseinheit 308 gespeichert. Die Speicherung bzw. die Angabe der Anzahl der verknüpften Inverter ist auf einfache Weise in einem Register möglich. In dem alternativen Fall muss der Spannungswert für das Verzögerungselement gespeichert werden. Dies lässt sich dadurch realisieren, dass eine digitale Darstellung dieses Spannungswerts in einem Register bereitgestellt wird, und ein Digital-zu-Analog-Konverter bereitgestellt wird, um den erforderlichen analogen Spannungswert für die Verzögerungseinheit 308 zu erzeugen.

Der in der Speichereinheit 311 gespeicherte Verzögerungswert 309 behält so lange seine Gültigkeit, bis das System vermöge der Kalibrierschalteinheit 317 erneut in einen Kalibriermodus schaltet. Dies ist z.B. dann erforderlich, wenn sich die Verzögerungsbedingungen in dem Netz, in welches die Datenverarbeitungsvorrichtung 100 eingebunden ist, ändern. Derartige Änderungen können sich beispielsweise durch Zuschalten oder Abschalten von Teilnehmern (d.h. Datenverarbeitungsvorrichtungen), Neukonfigurationen und durch Fehler ergeben.

Ferner ist es möglich, dass die in der Taktrückgewinnungseinrichtung 301 bereitgestellte Phasenregelschleife PLL in der Arbeitsphase, d.h. in dem Normalmodus eine Flankeninformation von beiden Empfangsdatenströmen 101 und 201 empfängt. Aufgrund der eingestellten Verzögerung erfolgt ein Empfang der Flankeninformation nunmehr zeitgleich. So lange der Referenzdatenstrom fehlerfrei empfangen wird, wird zunächst nur die Flankeninformation dieses Knotens ausgewertet.

Falls ein Ausfall des Referenzdatenstroms durch beispielsweise die Aktivitätserfassungseinheit 314, die in der Steuereinrichtung 316 bereitgestellt ist (siehe Fig. 1), bzw. durch Codes oder den Rahmenaufbau erkannt wird, schaltet die Phasenregelschleife auf die Flankenerkennung des zweiten Empfangsdatenstroms 201 um. Da das erfindungsgemäße Verarbeitungsverfahren neben der Gleichheit der Frequenz nun auch eine Phasengleichheit der beiden Empfangsdatenströme 101, 201 bereitstellt, ist für die Phasenregelschleife der Taktrückgewinnungseinrichtung 301 keine Einschwingzeit bzw. Einschwingperiode erforderlich. In vorteilhafter Weise bleibt das Taktsignal 302 bei einer Umschaltung einer Synchronisation von dem ersten Empfangsdatenstrom 101 (Referenzdatenstrom) zu dem mindestens einen zweiten Empfangsdatenstrom 201 ohne Störung unverändert erhalten.

Obwohl die vorliegende Erfindung vorstehend anhand bevorzugter Ausführungsbeispiele beschrieben wurde, ist sie darauf nicht beschränkt.

Auch ist die Erfindung nicht auf die genannten Anwendungsmöglichkeiten beschränkt.

## Patentansprüche

1. Datenverarbeitungsvorrichtung (100) mit:
a) einer ersten Empfangsdaten-Eingabeeinheit (103) zur Eingabe eines ersten Empfangsdatenstroms (101) mit einem Takt in die Datenverarbeitungsvorrichtung (100);
b) mindestens einer zweiten Empfangsdaten-Eingabeeinheit (203) zur Eingabe mindestens eines zweiten Empfangsdatenstroms (201) mit dem Takt in die Datenverarbeitungsvorrichtung (100);
c) eine Verzögerungseinheit (308) zur Verzögerung des mindestens einen zweiten Empfangsdatenstroms (201) gegenüber dem ersten Empfangsdatenstrom (101) um einen vorbestimmten zeitlichen Verzögerungswert (309) derart, dass der erste Empfangsdatenstrom (101) mit dem mindestens einen zweiten verzögerten Empfangsdatenstrom (201') synchronisiert ist;
d) einer umschaltbaren Taktrückgewinnungseinrichtung (301) zur Rückgewinnung eines Taktsignals (302) entsprechend dem Takt wechselweise aus dem ersten Empfangsdatenstrom (101) oder dem mindestens einen zweiten verzögerten Empfangsdatenstrom (201'); und
e) einer Steuereinrichtung (316) zur Steuerung des Umschaltens der Taktrückgewinnungseinrichtung (301) in Abhängigkeit von entweder dem ersten Empfangsdatenstrom (101) oder einem der mindestens einen zweiten Empfangsdatenströme (201);
f) wobei die Empfangsdatenströme (101; 201) derart durch die Verzögerungseinheit (308) synchronisiert sind, dass das Umschalten der Taktrückgewinnungseinrichtung (301) ohne Einschwingzeit durchführbar ist

2. Vorrichtung nach Anspruch 1,
**dadurch gekennzeichnet,**
**dass** die Taktrückgewinnungseinrichtung (301) als eine Phasenregelschleife (PLL) ausgebildet ist.

3. Vorrichtung nach Anspruch 1,
**dadurch gekennzeichnet,**
**dass** ferner eine Bestimmungseinheit (310) zur Bestimmung des zeitlichen Verzögerungswertes (309) entsprechend einer zeitlichen Verschiebung zwischen dem ersten Empfangsdatenstrom (101) und dem mindestens einen zweiten Empfangsdatenstrom (201) bereitgestellt ist.

4. Vorrichtung nach Anspruch 1,
**dadurch gekennzeichnet,**
**dass** eine Speichereinheit (311) zur Speicherung mindestens des zeitlichen Verzögerungswerts (309) bereitgestellt ist, wobei der mindestens eine zweite verzögerten Empfangsdatenstrom (201') entsprechend dem Verzögerungswert (309) durch die Verzögerungseinheit (308) verzögert ist.

5. Vorrichtung nach Anspruch 1,
**dadurch gekennzeichnet,**
**dass** eine Kalibrierschalteinheit (317) bereitgestellt ist, mit welcher von einem Normalmodus, in welchem das Taktsignal (302) aus dem ersten Empfangsdatenstrom (101) oder dem mindestens einen zweiten Empfangsdatenstrom (201) wieder gewonnen wird, in einen Kalibriermodus, in welchem mittels der Bestimmungseinheit (310) der zeitliche Verzögerungswert (309) für den mindestens einen zweiten Empfangsdatenstrom (201) bestimmt wird, umschaltbar ist.

6. Vorrichtung nach Anspruch 1,
**dadurch gekennzeichnet,**
**dass** die Verzögerungseinheit (308) zur Bereitstellung einer variablen Verzögerung des mindestens einen zweiten Empfangsdatenstroms (201) gegenüber dem ersten Empfangsdatenstrom (101) aus in Reihe geschalteten Invertereinheiten gebildet ist, deren Anzahl variierbar ist.

7. Vorrichtung nach Anspruch 1,
**dadurch gekennzeichnet,**
**dass** eine erste Sendedaten-Ausgabeeinheit (104) zur Ausgabe eines ersten Sendedatenstroms (102) in Abhängigkeit von dem ersten Empfangsdatenstrom (101) bereitgestellt ist.

8. Vorrichtung nach Anspruch 1,
**dadurch gekennzeichnet,**
**dass** eine zweite Sendedaten-Ausgabeeinheit (204) zur Ausgabe eines zweiten Sendedatenstroms (202) in Abhängigkeit von dem zweiten Empfangsdatenstrom (201) bereitgestellt ist.

9. Datenverarbeitungssystem mit mindestens zwei in Reihe geschalteten Datenverarbeitungsvorrichtungen nach den Ansprüchen 1 bis 8.

10. Verfahren zur Datenverarbeitung mit Taktrückgewinnung in einer Datenverarbeitungsvorrichtung (100) mit folgenden Schritten:
a) Eingeben eines ersten Empfangsdatenstroms (101) mit einem Takt in die Datenverarbeitungsvorrichtung (100) mittels einer ersten Empfangsdaten-Eingabeeinheit (103);
b) Eingeben mindestens eines zweiten Empfangsdatenstroms (201) mit dem Takt in die Datenverarbeitungsvorrichtung (100) mittels mindestens einer zweiten Empfangsdaten-Eingabeeinheit (203);
c) Verzögern des mindestens einen zweiten Empfangsdatenstroms (201) gegenüber dem ersten Empfangsdatenstrom (101) mittels einer Verzögerungseinheit (308) um einen vorbestimmten zeitlichen Verzögerungswert (309) derart, dass der erste Empfangsdatenstrom (101) mit dem mindestens einen zweiten verzögerten Empfangsdatenstrom (201') synchronisiert ist;
d) Rückgewinnen eines Taktsignals (302) wechselweise aus dem ersten Empfangsdatenstrom (101) oder dem mindestens einen verzögerten zweiten Empfangsdatenstrom (201') mittels einer umschaltbaren Taktrückgewinnungseinrichtung (301);
e) Steuern des Umschaltens der Taktrückgewinnungseinrichtung (301) in Abhängigkeit von entweder dem ersten Empfangsdatenstrom (101) oder einem der mindestens einen zweiten Empfangsdatenströme (201) mittels einer Steuereinrichtung (316);
f) wobei die Empfangsdatenströme (101; 201) derart durch die Verzögerungseinheit (308) synchronisiert sind, dass das Umschalten der Taktrückgewinnungseinrichtung (301) ohne Einschwingzeit durchführbar ist.

11. Verfahren nach Anspruch 10,
**dadurch gekennzeichnet,**
**dass** die Phase des rückgewonnenen Taktsignals (302) mittels einer in der Taktrückgewinnungseinrichtung (301) bereitgestellten Phasenregelschleife (PLL) geregelt wird.

12. Verfahren nach Anspruch 10,
**dadurch gekennzeichnet,**
**dass** der zeitliche Verzögerungswert (309) entsprechend der zeitlichen Verschiebung zwischen dem ersten Empfangsdatenstrom (101) und dem mindestens einen zweiten Empfangsdatenstrom (201) mittels einer Bestimmungseinheit (310) bestimmt wird.

13. Verfahren nach Anspruch 10,
**dadurch gekennzeichnet,**
**dass** mindestens ein Verzögerungswert (309) in einer Speichereinheit (311) gespeichert wird, wobei der mindestens eine zweite Empfangsdatenstrom (201) entsprechend dem gespeicherten Verzögerungswert (309) verzögert wird.

14. Verfahren nach Anspruch 13,
**dadurch gekennzeichnet,**
**dass** mittels einer Kalibrierschalteinheit (317) zwischen einem Normalmodus, in welchem das Taktsignal (302) aus dem ersten Empfangsdatenstrom (101) oder dem mindestens einen zweiten Empfangsdatenstrom (201) wieder gewonnen wird, in einen Kalibriermodus, in welchem mittels der Bestimmungseinheit (310) der Verzögerungswert (309) für den mindestens einen zweiten Empfangsdatenstrom (201) bestimmt wird, umgeschaltet wird.

15. Verfahren nach Anspruch 10,
**dadurch gekennzeichnet,**
**dass** mittels der Verzögerungseinheit (308) eine variable Verzögerung des mindestens einen zweiten Empfangsdatenstroms (201) gegenüber dem ersten Empfangsdatenstrom (101) bereitgestellt wird, wobei in Reihe geschaltete Invertereinheiten bereitgestellt werden, deren Anzahl variiert werden kann.

16. Verfahren nach Anspruch 10,
**dadurch gekennzeichnet,**
**dass** ein erster Sendedatenstrom (102) an einer ersten Sendedaten-Ausgabeeinheit (104) der Datenverarbeitungsvorrichtung (100) in Abhängigkeit von dem ersten Empfangsdatenstrom (101) bereitgestellt wird.

17. Verfahren nach Anspruch 16,
**dadurch gekennzeichnet,**
**dass** ein zweiter Sendedatenstrom (202) an einer zweiten Sendedaten-Ausgabeeinheit (204) der Datenverarbeitungsvorrichtung (100) in Abhängigkeit von dem zweiten Empfangsdatenstrom (201) bereitgestellt wird.

## Claims

1. Data processing device (100) having:
a) a first received data input unit (103) for inputting a first received data stream (101) with a clock to the data processing device (100);
b) at least one second received data input unit (203) for inputting at least one second received data stream (201) with the clock to the data processing device (100);
c) a delay unit (308) for delaying the at least one second received data stream (201) by a predetermined temporal delay value (309) with respect to the first received data stream (101) in such a manner that the first received data stream (101) is synchronized with the at least one second delayed received data stream (201');
d) a switchable clock recovery device (301) for alternately recovering a clock signal (302) corresponding to the clock from the first received data stream (101) or the at least one second delayed received data stream (201'); and
e) a control device (316) for controlling the switching of the clock recovery device (301) on the basis of either the first received data stream (101) or one of the at least one second received data streams (201);
f) the received data streams (101; 201) being synchronized by the delay unit (308) in such a manner that the clock recovery device (301) can be switched without a settling time.

2. Device according to Claim 1,
**characterized in that**
the clock recovery device (301) is in the form of a phase locked loop (PLL).

3. Device according to Claim 1,
**characterized in that**
a determination unit (310) for determining the temporal delay value (309) in accordance with a temporal shift between the first received data stream (101) and the at least one second received data stream (201) is also provided.

4. Device according to Claim 1,
**characterized in that**
a memory unit (311) for storing at least the temporal delay value (309) is provided, the at least one second delayed received data stream (201') being delayed by the delay unit (308) in accordance with the delay value (309).

5. Device according to Claim 1,
**characterized in that**
a calibration switching unit (317) which can be used to switch from a normal mode, in which the clock signal (302) is recovered from the first received data stream (101) or from the at least one second received data stream (201), to a calibration mode, in which the determination unit (310) is used to determine the temporal delay value (309) for the at least one second received data stream (201), is provided.

6. Device according to Claim 1,
**characterized in that**
the delay unit (308) for providing a variable delay for the at least one second received data stream (201) with respect to the first received data stream (101) is formed from inverter units which are connected in series and the number of which can be varied.

7. Device according to Claim 1,
**characterized in that**
a first transmission data output unit (104) for outputting a first transmission data stream (102) on the basis of the first received data stream (101) is provided.

8. Device according to Claim 1,
**characterized in that**
a second transmission data output unit (204) for outputting a second transmission data stream (202) on the basis of the second received data stream (201) is provided.

9. Data processing system having at least two series-connected data processing devices according to Claims 1 to 8.

10. Data processing method with clock recovery in a data processing device (100), said method having the following steps:
a) a first received data stream (101) with a clock is input to the data processing device (100) using a first received data input unit (103);
b) at least one second received data stream (201) with the clock is input to the data processing device (100) using at least one second received data input unit (203);
c) the at least one second received data stream (201) is delayed by a predetermined temporal delay value (309) with respect to the first received data stream (101) using a delay unit (308) in such a manner that the first received data stream (101) is synchronized with the at least one second delayed received data stream (201');
d) a clock signal (302) is alternately recovered from the first received data stream (101) or the at least one delayed second received data stream (201') using a switchable clock recovery device (301);
e) the switching of the clock recovery device (301) is controlled on the basis of either the first received data stream (101) or one of the at least one second received data streams (201) using a control device (316);
f) the received data streams (101; 201) being synchronized by the delay unit (308) in such a manner that the clock recovery device (301) can be switched without a settling time.

11. Method according to Claim 10,
**characterized in that**
the phase of the recovered clock signal (302) is controlled using a phase locked loop (PLL) provided in the clock recovery device (301).

12. Method according to Claim 10,
**characterized in that**
the temporal delay value (309) is determined in accordance with the temporal shift between the first received data stream (101) and the at least one second received data stream (201) using a determination unit (310).

13. Method according to Claim 10,
**characterized in that**
at least one delay value (309) is stored in a memory unit (311), the at least one second received data stream (201) being delayed in accordance with the stored delay value (309).

14. Method according to Claim 13,
**characterized in that**
a calibration switching unit (317) is used to switch between a normal mode, in which the clock signal (302) is recovered from the first received data stream (101) or from the at least one second received data stream (201), and a calibration mode, in which the determination unit (310) is used to determine the delay value (309) for the at least one second received data stream (201).

15. Method according to Claim 10,
**characterized in that**
the delay unit (308) is used to provide a variable delay for the at least one second received data stream (201) with respect to the first received data stream (101), inverter units which are connected in series and the number of which can be varied being provided.

16. Method according to Claim 10,
**characterized in that**
a first transmission data stream (102) is provided at a first transmission data output unit (104) of the data processing device (100) on the basis of the first received data stream (101).

17. Method according to Claim 16,
**characterized in that**
a second transmission data stream (202) is provided at a second transmission data output unit (204) of the data processing device (100) on the basis of the second received data stream (201).

## Revendications

1. Dispositif de traitement de données (100) comprenant :
a) une première unité de réception et d'entrée de données (103) pour introduire un premier flux de données de réception (101) avec une cadence dans le dispositif de traitement de données (100),
b) au moins une seconde unité d'entrée de données de réception (203) pour entrer au moins un second flux de données de réception (201) avec la cadence dans le dispositif de traitement de données (100),
c) une unité de temporisation (308) pour temporiser au moins un second flux de données de réception (201) par rapport au premier flux de données de réception (101), d'une première valeur de temporisation (309) prédéfinie dans le temps de manière que le premier flux de données de réception (101) soit synchronisé avec au moins un second flux de données de réception (201'), temporisé,
d) une installation de récupération de cadence (301), commutable pour récupérer un signal de cadence (signal d'horloge) (302) en fonction de la cadence, alternativement à partir du premier flux de données de réception (101) ou d'au moins un second flux de données de réception (201'), temporisé,
e) une installation de commande (316) pour commander la commutation de l'installation de récupération de cadence (301) en fonction soit du premier flux de données de réception (101), soit d'au moins un second flux de données de réception (201), et
f) les flux de données de réception (101, 201) étant synchronisés par l'unité de temporisation (308) pour que la commutation de l'installation de récupération de cadence (301) se fasse sans temps de mise en cadence.

2. Dispositif selon la revendication 1,
**caractérisé en ce que**
l'installation de récupération de cadence (301) est réalisée sous la forme d'une boucle à verrouillage de phase (PLL).

3. Dispositif selon la revendication 1,
**caractérisé en ce qu'**
en outre, une unité de détermination (310) pour déterminer la valeur de temporisation (309) dans le temps est fournie en fonction d'un décalage dans le temps entre le premier flux de données de réception (101) et au moins un second flux de données de réception (201).

4. Dispositif selon la revendication 1,
**caractérisé par**
une unité de mémoire (311) pour enregistrer en mémoire au moins la valeur de temporisation dans le temps (309) et au moins un second flux de données de réception temporisé (201') est retardé en fonction de la valeur de temporisation (309) par l'unité de temporisation (308).

5. Dispositif selon la revendication 1,
**caractérisé par**
une unité de commutation de calibrage (317) permettant de commuter à partir d'un mode normal dans lequel le signal de cadence (302) est récupéré du premier flux de données de réception (101) ou d'au moins un second flux de données de réception (201), pour passer dans un mode de calibrage dans lequel, à l'aide de l'unité de détermination (310) on détermine la valeur de temporisation (309) dans le temps pour au moins un second flux de données de réception (201).

6. Dispositif selon la revendication 1,
**caractérisé en ce que**
l'unité de temporisation (308) peut être modifiée pour fournir une temporisation variable d'au moins un second flux de données de réception (201) par rapport au premier flux de données de réception (101) à partir d'unités d'inversion branchées en série, et dont le nombre est variable.

7. Dispositif selon la revendication 1,
**caractérisé par**
une première unité de fourniture de données d'émission (104) pour fournir un premier flux de données d'émission (102) en fonction du premier flux de données de réception (101).

8. Dispositif selon la revendication 1,
**caractérisé par**
une seconde unité de fourniture de données d'émission (204) pour fournir un second flux de données d'émission (202) en fonction du second flux de données de réception (201).

9. Système de traitement de données comportant au moins deux dispositifs de traitement de données branchées en série selon les revendications 1 à 8.

10. Procédé de traitement de données avec récupération de cadence dans un dispositif de traitement de données (100) comprenant les étapes suivantes :
a) introduction d'un premier flux de données de réception (101) avec une cadence dans le dispositif de traitement de données (100) à l'aide d'une première unité d'entrée de données de réception (103),
b) introduction d'au moins un second flux de données de réception (201) avec la cadence dans le dispositif de traitement de données (100) à l'aide d'au moins une seconde unité d'entrée de données de réception (203),
c) temporisation d'au moins un second flux de données de réception (201) par rapport au premier flux de données de réception (101), à l'aide d'une unité de temporisation (308) d'une valeur de temporisation (309) dans le temps, prédéfinie, de sorte que le premier flux de données de réception (101) soit synchronisé avec au moins un second flux de données de réception (201'), temporisé,
d) récupération d'un signal de cadence (302) alternativement à partir du premier flux de données de réception (101) ou d'au moins un second flux de données de réception (201'), à l'aide d'une installation commutable de récupération de cadence (301),
e) commande de la commutation de l'installation de récupération de cadence (301) en fonction soit du premier flux de données de réception (101), soit d'au moins un second flux de données de réception (201), à l'aide d'une installation de commande (316),
f) les flux de données de réception (101 ; 201) étant synchronisés par l'unité de temporisation (308) pour que la commutation de l'installation de récupération de cadence (301) se fasse sans régime transitoire.

11. Procédé selon la revendication 10,
**caractérisé en ce que**
la phase du signal de cadence (302) récupéré, est régulée par une boucle de régulation de phase (PLL) de l'installation de récupération de phase (301).

12. Procédé selon la revendication 10,
**caractérisé en ce que**
la temporisation dans le temps (309) est définie en fonction du décalage dans le temps entre le premier flux de données de réception (101) et au moins un second flux de données de réception (201) à l'aide d'une unité de détermination (310).

13. Procédé selon la revendication 10,
**caractérisé en ce qu'**
au moins une valeur de temporisation (309) est mémorisée dans une unité de mémoire (311) et au moins un second flux de données de réception (201) est temporisé en fonction de la valeur de temporisation (309) mise en mémoire.

14. Procédé selon la revendication 13,
**caractérisé en ce qu'**
à l'aide d'une unité de commutation calibrée (317), on commute entre le mode normal dans lequel le signal de cadence (302) est de nouveau récupéré à partir du premier flux de données de réception (101) ou d'au moins un second flux de données de réception (201) dans un mode de calibrage dans lequel à l'aide de l'unité de détermination (310), on détermine la valeur de temporisation (309) pour au moins un second flux de données de réception (201).

15. Procédé selon la revendication 10,
**caractérisé en ce qu'**
à l'aide de l'unité de temporisation (308), on fournit une temporisation variable d'au moins un second flux de données de réception (201) par rapport au premier flux de données de réception (101), à l'aide d'unités d'inverseurs branchées en série et dont on modifie le nombre.

16. Procédé selon la revendication 10,
**caractérisé en ce qu'**
un premier flux de données d'émission (102) est fourni à une première unité de fourniture de données d'émission (104) du dispositif de traitement de données (100) en fonction du premier flux de données de réception (101).

17. Procédé selon la revendication 16,
**caractérisé en ce qu'**
un second flux de données de réception (202) est fourni à une seconde unité de fourniture de données d'émission (204) du dispositif de traitement de données (100) en fonction du second flux de données de réception (201).
